Europäisches Patentamt

European Patent Office

Office européen des brevets

(19)

(11) Veröffentlichungsnummer: **0 222 153 B1**

(12) **EUROPÄISCHE PATENTSCHRIFT**

(45) Veröffentlichungstag der Patentschrift:
03.01.90

(51) Int. Cl.⁴: **E21F 5/20, B65G 53/62**

(21) Anmeldenummer: 86113856.8

(22) Anmeldetag: 07.10.86

(54) Vorrichtung zum staubfreien Austrag von staubförmigen Medien.

(30) Priorität: 12.10.85 DE 3536434

(43) Veröffentlichungstag der Anmeldung:
20.05.87 Patentblatt 87/21

(45) Bekanntmachung des Hinweises auf die Patenterteilung:
03.01.90 Patentblatt 90/1

(84) Benannte Vertragsstaaten:
FR GB

(56) Entgegenhaltungen:
DE-A- 1 583 816
DE-A- 1 957 265
DE-A- 2 516 767
DE-A- 2 732 021
DE-A- 3 020 549
DE-B- 2 719 849

GLUECKAUF, Bd. 108 (1972) Nr. 19, S. 868-871; H.
BECKER: "Nassentstauber für
Streckenvortriebsmaschinen"

(73) Patentinhaber: Hölter, Heinz, Dipl.-Ing.,
Beisenstrasse 39-41, D-4390 Gladbeck(DE)

(72) Erfinder: Hölter, Heinz, Dipl.-Ing., Beisenstrasse 39-41,
D-4390 Gladbeck(DE)
Erfinder: Igelbüscher, Heinrich, Dipl.-Ing.,
Marcq-en-Baroeul-Strasse 60, D-4390 Gladbeck(DE)
Erfinder: Gresch, Heinrich, Ing. grad.,
Franz-Lehàr-Strasse 25, D-4600 Dortmund-Wickede(DE)
Erfinder: Dewert, Heribert, Dipl.-Ing., Bahnhofstrasse 23,
D-4390 Gladbeck(DE)

(74) Vertreter: Spalthoff, Adolf, Dipl.-Ing. et al,
Pelmanstrasse 31 Postfach 34 02 20,
D-4300 Essen 1(DE)

## Beschreibung

Die Erfindung betrifft eine Vorrichtung zum staubfreien Austrag von staubförmigen Medien aus einem in einem Untertagebetrieb im Einsatz befindlichen Filter, welcher eine diesem nachgeordnete Zellenradschleuse aufweist.

Im untertägigen Bergbau finden Trockenfilterentstauber Verwendung, die mit Staubaustragsvorrichtungen versehen sind, welche aus Zellenradschleusen bestehen, um den Staub trocken auszutragen und in Staubsäcken einzulagern.

Eine derartige Vorrichtung ist bekannt durch die FR-A 1 257 382. In dieser wird vorgeschlagen, den in einer Filtervorrichtung abgeschiedenen Staub über Sammeltrichter auf einen Schneckenförderer zu führen und von diesem in eine Schleusenvorrichtung zu transportieren, an deren Ausgang der Staub mittels einer entsprechenden Vorrichtung in Säcke abgefüllt wird.

Diese an sich sehr einfache und sichere Methode erweist sich in der Praxis für den Betrieb als durchaus ausreichend. Erst bei hohem Staubanfall zeigt es sich, daß das Bunkern des Staubes in Säcken nicht ausreichend ist. Das öftere Wechseln der Säcke erweist sich als Hindernis beim Einsatz derartig aufgebauter Entstaubungseinrichtungen.

Weiterhin ist es bekannt, den Staub mittels Naßpumpen auszutragen, die diesen mit einem Wassergemisch ansaugen, um den Staub dann auf das Haufwerk zu transportieren.

Diese bekannten Vorrichtungen vermögen die an sie gestellten Ansprüche nicht zu erfüllen, da sie einmal nicht störungsfrei arbeiten und zum anderen den Staub nicht so benetzen, daß dieser nicht mehr flugfähig z.B. mit dem Haufwerk abgeführt werden kann.

Durch die Zeitschrift "Glückauf ", 1972, S. 868 – 871, ist ein Naßentstauber für Streckenvortriebsmaschinen bekannt.

Die Reinigung des staubhaltigen Wetterstroms erfolgt in diesen Entstaubern durch Anlagerung des Staubes an Wassertropfen und deren anschließende Trennung vom Luftstrom.

Die Anlagerung von Staub an Wasser erfolgt durch Prall- und durch Zentrifugalkräfte bei Relativgeschwindigkeiten zwischen 50 und 120 m/s in der sog. Kontaktzone. Um eine gute Kontaktleistung zu erzielen muß in den Rohluftstrom eine bestimmte Wassermenge eingedüst werden und eine ausreichende, Anzahl von Tropfen vorhanden sein. Der Einsatz von Zweistoffdüsen wirkt sich dabei leistungssteigernd aus. Die Trennung der Trübe aus dem Luftstrom erfolgt in einem der Kontaktzone nachgeschalteten Tropfenabscheider durch Schlepp- oder durch Zentrifugalkräfte. Da beim Einsatz untertage hohe Wirkungsgrade im Feinstaubbereich erreicht werden müssen, erfolgt die Abscheidung bei hohen Geschwindigkeiten. Die Tropfenabscheider sind für die Abscheidung feinster Tropfen ausgelegt.

Von diesem Stand der Technik ausgehend liegt der Erfindung die Aufgabe zugrunde, eine Vorrichtung der eingangs genannten Art zu schaffen, welche eine vergleichsweise hohe Abscheideleistung bei relativ geringem Energieaufwand ermöglicht.

Erfindungsgemäß wird dies dadurch erreicht, daß an die Zellenradschleuse ein mit einem Sekundärlufteintritt ausgerüstetes Ringkammerstrahlgebläse angeschlossen ist, das mit einer Druckluftzufuhr verbunden ist und dem eine Benetzungseinrichtung nachgeordnet ist, welche mit der Druckluftzufuhr sowie einer Frischwasserzufuhr verbunden ist und in einen Förderschlauch einmündet, der an einen Zyklon angeschlossen ist. Auf diese Weise ist es möglich, mit vergleichsweise wenig Wasser einen staubfreien Austrag zu bewirken, so daß der zu beseitigende Staub angefeuchtet dem Haufwerk übergeben werden kann. Außerdem kann die Vorrichtung intermittierend betrieben werden, falls diese einer Trockenfilteranlage zugeordnet ist, die einer Teil- oder Vollschnittmaschine nachgeschaltet ist.

Im Rahmen der Erfindung ist es auch möglich, die Druckluft- und Frischwasserzufuhr zusätzlich an den Förderschlauch anzuschließen oder statt an der Benetzungseinrichtung nur an den Förderschlauch anzuschließen, so daß in diesem die Benetzung erfolgt.

Zwischen dem Filter und der Zellenradschleuse ist ein Kratzband und/oder eine Austragschnecke vorgesehen, welches bzw. welche die staubförmigen Medien der Zellenradschleuse zufördern.

Zwischen der Zellenradschleuse und dem Ringkammerstrahlgebläse ist ein Trichter angeordnet, so daß die staubförmigen Medien ohne die Gefahr einer Entstaubung in das Ringkammerstrahlgebläse gelangen.

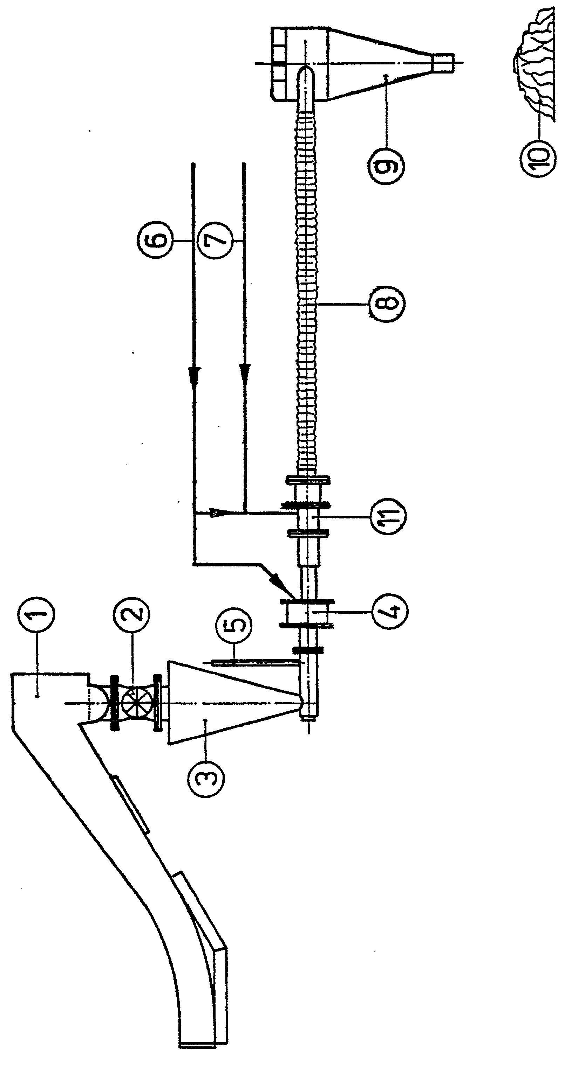

In der Zeichnung ist die erfindungsgemäße Vorrichtung dargestellt.

Mit 1 ist ein staubförderndes Kratzband und/oder eine Austragschnecke bezeichnet, deren Austragsende die Zellenradschleuse 2 nachgeordnet ist. Die Zellenradschleuse 2 übergibt den aus dem Kratzband 1 zugeförderten Staub über den Trichter 3 in das Ringkammerstrahlgebläse 4, das mit einem Sekundärlufteintritt 5 ausgerüstet ist und mit einer Druckluftzufuhr 6 in Verbindung steht. Dem Ringkammerstrahlgebläse 4 ist die Benetzungseinrichtung 11 nachgeordnet, welche mit der Druckluftzufuhr 6 sowie einer Frischwasserzufuhr 7 verbunden ist. Die Benetzungseinrichtung 11 mündet in einen Förderschlauch 8 ein, der an einen Zyklon 9 angeschlossen ist, aus welchem der benetzte Staub dem Haufwerk 10 gut befeuchtet und staubfrei übergeben wird.

Infolge des Sekundärlufteintrittes 5, welcher durch Saugung bewirkt wird, ergibt sich ein vergleichsweise niedriger Druckluftverbrauch des Ringkammerstrahlgebläses 4 über die Druckluftzufuhr 6.

Das Ringkammerstrahlgebläse 4, in das die Luft mit einem Ringstrahl außerhalb des Rohres eintritt, nimmt den zu beseitigenden Staub mit der Senkundärluft an, ohne selbst viel Luft zu verbrauchen, jedoch wird mit sehr hoher Luftgeschwindigkeit das Frischwasser in der Benetzungseinrichtung 11 mit der Luft derart verwirbelt, daß jedes Staubteilchen im Schlauch 8 gut benetzt über den Zyklon 9 ausgetragen werden kann.

**Patentansprüche**

1. Vorrichtung zum staubfreien Austrag von staubförmigen Medien aus einem in einem Untertagebetrieb im Einsatz befindlichen Filter, welcher eine nachgeordnete Zellenradschleuse aufweist, dadurch gekennzeichnet, daß an die Zellenradschleuse (2) ein mit einem Sekundärlufteintritt ausgerüstetes Ringkammerstrahlgebläse (4) angeschlossen ist, das mit einer Druckluftzufuhr (6) verbunden ist und eine dieser nachgeordnete Benetzungseinrichtung (11) vorgesehen ist, welche mit der Druckluftzufuhr (6) sowie einer Frischwasserzufuhr (7) verbunden ist und in einen Förderschlauch (8) einmündet, der an ein Zyklon (9) angeschlossen ist.

2. Vorrichtung nach Anspruch 1, dadurch gekennzeichnet, daß die Druckluftzufuhr (6) und die Frischwasserzufuhr (7) an die Benetzungseinrichtung (11) und/oder den Förderschlauch (8) angeschlossen sind.

3. Vorrichtung nach Anspruch 1 oder 2, dadurch gekennzeichnet, daß zwischen dem Filter und der Zellenradschleuse (2) ein Kratzband (1) und/oder eine Austragschnecke vorgesehen ist bzw. sind.

4. Vorrichtung nach Anspruch 1 oder einem der vorhergehenden, dadurch gekennzeichnet, daß zwischen der Zellenradschleuse (2) und dem Ringkammerstrahlgebläse (4) ein Trichter (3) angeordnet ist.

**Claims**

1. Apparatus for the dust-free delivery of powdered media from a filter which is in use in an underground works and comprises a bucket-wheel elevator disposed thereafter, characterised in that there is connected to the bucket-wheel elevator (2) an annular chamber discharge blower (4) which is equipped with a secondary air inlet and is connected to a compressed air supply (6), and a wetting device (11) is provided disposed downstream of this compressed air supply, is connected to the compressed air supply (6) and a fresh water supply (7), and leads into a conveyer hose (8) which is connected to a cyclone (9).

2. Apparatus as claimed in claim 1, characterised in that the compressed air supply (6) and the fresh water supply (7) are connected to the wetting device (11) and/or to the conveyer hose (8).

3. Apparatus as claimed in claim 1 or 2, characterised in that a scraper belt (1) and/or a discharge worm is or are disposed between the filter and the bucket-wheel elevator (2).

4. Apparatus as claimed in claim 1 or any of the preceding claims, characterised in that a hopper (3) is disposed between the bucket-wheel elevator (2) and the annular chamber discharge blower (4).

**Revendications**

1. Dispositif pour l'évacuation sans poussière de milieux pulvérulents à partir d'un filtre qui se trouve en service dans une exploitation souterraine, ledit filtre présentant un sas à roue cellulaire disposé en aval, caractérisé en ce qu'au sas (2) à roue cellulaire est raccordée une soufflerie à jet (4) à chambre annulaire munie d'une entrée d'air secondaire, soufflerie qui est reliée à une arrivée d'air comprimé (6), et en ce qu'est prevu un dispositif de mouillage (11) disposé en aval de la soufflerie, dispositif de mouillage qui est relié à l'arrivée d'air comprimé (6) et à une arrivée d'eau fraîche (7) et débouche dans un tuyau flexible de transport (8), qui est raccordé à un cyclone (9).

2. Dispositif selon la revendication 1, caractérisé en ce que l'arrivée d'air comprimé (6) et l'arrivée d'eau fraîche (7) sont raccordées au dispositif de mouillage (11) et/ou au tuyau flexible de transport (8).

3. Dispositif selon la revendication 1 ou 2, caractérisé en ce que, entre le filtre et le sas à roue cellulaire (2) est (sont) prévu(e) (s) un tranporteur à raclettes (1) et/ou une vis sans fin de transport.

4. Dispositif selon le revendication 1 ou l'une des revendications précédentes, caractérisé en ce que, entre le sas à roue cellulaire (2) et la soufflerie à jet (4) à chambre annulaire, est disposé un entonnoir (3).